# EUROPEAN PATENT APPLICATION

(11) **EP 4 545 590 A1**
(43) Date of publication of application: **30.04.2025**
(21) Application number: 23827278.5
(22) Date of filing: 22.06.2023
(51) Int. Cl.: C08J 3/22, C08K 5/18, C08L 9/02, C08L 13/00, C08L 15/00, C08L 21/00, C08L 23/08, C08L 33/08

(54) **CROSSLINKING-AGENT MASTERBATCH, RUBBER COMPOSITION CONTAINING CROSSLINKING-AGENT MASTERBATCH, AND CROSSLINKED OBJECT OBTAINED THEREFROM**

(30) Priority: 24.06.2022 JP 2022102262
(71) Applicant: Osaka Soda Co., Ltd., Osaka-shi Osaka 550-0011 (JP)
(72) Inventor: YANO, Tomoyuki, Osaka-shi, Osaka 550-0011 (JP); OHNUKI, Kohji, Osaka-shi, Osaka 550-0011 (JP); KITAGAWA, Motoki, Osaka-shi, Osaka 550-0011 (JP)
(74) Representative: Vossius & Partner Patentanwälte Rechtsanwälte mbB
(86) International application number: PCT/JP2023/023216
(87) International publication number: WO 2023/249096

(57) **Abstract**

Aromatic polyamines may be used as crosslinking agents to provide good scorch stability, while aromatic polyamines have poor dispersibility and, due to their powder form, can scatter and impair the working environment. The problem herein is to provide a method for using an aromatic polyamine that ensures it has excellent dispersibility and does not scatter. It has been found that the problem can be solved with a masterbatch prepared by dispersing an aromatic polyamine and a lubricant in a synthetic rubber in advance.

## Description

### TECHNICAL FIELD

The present invention relates to a crosslinking agent masterbatch, a rubber composition containing the crosslinking agent masterbatch, and a crosslinked product thereof.

### BACKGROUND ART

Examples of rubbers containing a carboxyl group as a crosslinking group include acrylic rubbers, ethylene-acrylic rubbers, and carboxyl group-containing nitrile rubbers. Polyamine compounds may be used as crosslinking agents for them.

### CITATION LIST

### PATENT LITERATURE

Patent Literature 1: JP 4087178 B
Patent Literature 2: JP 6879212 B

### SUMMARY OF INVENTION

### TECHNICAL PROBLEM

However, the use of the aliphatic polyamine hexamethylenediamine or hexamethylenediamine carbamate as a crosslinking agent unfortunately shortens the scorch time, making processing difficult.

It has been reported that when an acrylic rubber is used together with a type of aromatic polyamine such as 2,2-bis[4-(4-aminophenoxy)phenyl]propane, silica, an aliphatic polyhydric alcohol, and a guanidine compound, no scorching can occur during kneading and injection molding, and sufficient mechanical properties can be provided after primary vulcanization alone (Patent Literature 1).

Here, a general method for kneading a synthetic rubber includes the following two steps: a first step of kneading a formulation free of any crosslinking agent and any crosslinking accelerator (hereinafter, referred to as A kneading), and a second step of adding a crosslinking agent and optionally a crosslinking accelerator and kneading the mixture at a temperature low enough not to cause scorching (hereinafter, referred to as B kneading).

However, since the aromatic polyamine crosslinking agent 2,2-bis[4-(4-aminophenoxy)phenyl]propane has a high melting point of 128°C, it may show low dispersibility when added during the B kneading or kneaded only with an open roll mill as described in the Patent Literature above.

Furthermore, since 2,2-bis[4-(4-aminophenoxy)phenyl]propane is in powder form, it may scatter during handling, such as during weighing or adding to an open roll mill or other equipment, giving rise to concerns such as inhalation or contamination of the surrounding area. Thus, there is room for improvement from a working environment perspective.

It has also been reported that a method for obtaining a crosslinkable rubber composition of a carboxyl group-containing nitrile copolymer rubber includes mixing an acrylic rubber and an aromatic polyvalent amine crosslinking agent at a temperature that is higher by at least 10°C than the melting point to prepare a masterbatch (Patent Literature 2).

Although 2,2-bis[4-(4-aminophenoxy)phenyl]propane is used as the aromatic polyvalent amine crosslinking agent, the proportion of the aromatic polyvalent amine crosslinking agent used in the examples is 30 to 50% by mass, which is low for an active ingredient, resulting in many problems such as an increase in the amount of the masterbatch used as a crosslinking agent, a lot of essentially unnecessary ingredients such as a binder rubber added upon the addition of the masterbatch, and a higher transportation cost for the masterbatch, all of which need to be improved.

The present invention aims to provide techniques for improving the above-described problems.

### SOLUTION TO PROBLEM

As a result of various investigations to achieve the aim, the present inventors have found that the above problems can be solved with a masterbatch prepared by dispersing an aromatic polyamine and a lubricant in a synthetic rubber in advance.

Exemplary embodiments of the present invention are as follows.
Embodiment 1. A crosslinking agent masterbatch, containing at least:
   (A) a synthetic rubber;
   (B) an aromatic polyamine; and
   (C) a lubricant,
   the crosslinking agent masterbatch containing 17% by mass to 55% by mass of (A) the synthetic rubber, 40% by mass to 78% by mass of (B) the aromatic polyamine, and 0.1% by mass to 10% by mass of (C) the lubricant.
Embodiment 2. The crosslinking agent masterbatch according to Embodiment 1,
   wherein (A) the synthetic rubber is at least one selected from the group consisting of an acrylic rubber, an ethylene-acrylic rubber, a nitrile rubber, and a hydrogenated nitrile rubber.
Embodiment 3. The crosslinking agent masterbatch according to Embodiment 1 or 2,
   wherein (B) the aromatic polyamine is an aromatic polyamine with no benzidine structure.
Embodiment 4. The crosslinking agent masterbatch according to any one of Embodiments 1 to 3,
   wherein (B) the aromatic polyamine is a compound represented by the following formula (1) or the following formula (2): 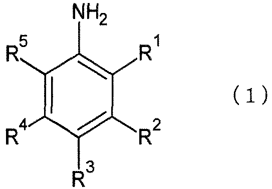 wherein R¹ to R⁵ are the same or different and each represent a monovalent group, at least one of R¹ to R⁵ is an amino group, and those of R¹ to R⁵ which are not amino groups may each be connected via a carbon atom, an oxygen atom, and/or a sulfur atom to form a ring structure, 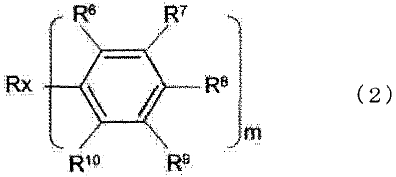 wherein m represents an integer of 2 to 4; Rx represents a divalent to tetravalent group; and R⁶ to R¹⁰ are the same or different and each represent a monovalent group, at least one of R⁶ to R¹⁰ is an amino group, each unit may have the same or a different substituent at the same position, and those of R⁶ to R¹⁰ which are not amino groups may each be connected via a carbon atom, an oxygen atom, and/or a sulfur atom to form a ring structure.
Embodiment 5. A rubber composition, containing at least:
   the crosslinking agent masterbatch according to any one of Embodiments 1 to 4, and
   a polyamine-crosslinkable rubber.
Embodiment 6. The rubber composition according to Embodiment 5,
   wherein the rubber composition contains the crosslinking agent masterbatch according to any one of Embodiments 1 to 4 in an amount of 0.5 parts by mass to 9.0 parts by mass per 100 parts by mass of the polyamine-crosslinkable rubber.
Embodiment 7. The rubber composition according to Embodiment 5 or 6,
   wherein the polyamine-crosslinkable rubber is at least one selected from the group consisting of a carboxyl group-containing acrylic rubber, a carboxyl group-containing ethylene-acrylic rubber, a carboxyl group-containing nitrile rubber, and a carboxyl group-containing hydrogenated nitrile rubber.
Embodiment 8. A crosslinked rubber product, produced from the rubber composition according to any one of Embodiments 5 to 7.

### ADVANTAGEOUS EFFECTS OF INVENTION

The present invention relates to a crosslinking agent masterbatch containing at least a synthetic rubber, an aromatic polyamine, and a lubricant, and can improve processability during the production of the crosslinking agent masterbatch and can increase the concentration of the aromatic polyamine. The present invention can also enhance the dispersibility of the aromatic polyamine as a crosslinking agent in the production of a rubber composition, and can improve the working environment by using the crosslinking agent masterbatch, for example, to reduce scattering of the crosslinking agent.

### DESCRIPTION OF EMBODIMENTS

### <Crosslinking agent masterbatch>

The crosslinking agent masterbatch of the present invention (hereinafter, also referred to as "masterbatch") contains at least (A) a synthetic rubber, (B) an aromatic polyamine, and (C) a lubricant.

### (A) Synthetic rubber

The synthetic rubber used in the crosslinking agent masterbatch of the present invention is not limited. Examples include acrylic rubbers, ethylene-acrylic rubbers, nitrile rubbers, and hydrogenated nitrile rubbers. These may be used alone or in combinations of two or more. Moreover, the synthetic rubber used in the crosslinking agent masterbatch may be the same as or different from the polyamine-crosslinkable rubber used in the rubber composition that contains the crosslinking agent masterbatch. In the present invention, the synthetic rubber used in the crosslinking agent masterbatch and the polyamine-crosslinkable rubber are preferably in the same category. Herein, the term "in the same category" means that, if the synthetic rubber used in the crosslinking agent masterbatch is an acrylic rubber, the polyamine-crosslinkable rubber is an acrylic rubber. The structural units of the two acrylic rubbers may be different from each other.

The synthetic rubber used in the crosslinking agent masterbatch of the present invention mainly functions as a component that improves the dispersibility of (B) the aromatic polyamine contained in the crosslinking agent masterbatch into the rubber composition. Therefore, the synthetic rubber used in the crosslinking agent masterbatch may or may not have a structural unit derived from a crosslinking group-containing unsaturated monomer.

The acrylic rubber used in the crosslinking agent masterbatch of the present invention is preferably a polymer that contains at least 50% by mass of a structural unit derived from a (meth)acrylate ester as a main component. For example, the acrylic rubber used in the masterbatch of the present invention may be a polymer that contains 50% by mass to 100% by mass of a structural unit derived from a (meth)acrylate ester and 0% by mass to 20% by mass of a structural unit derived from a crosslinking group-containing unsaturated monomer. Here, the term "(meth)acrylate ester" means "acrylate ester or methacrylate ester", and the same applies to similar expressions herein.

The structural unit derived from a (meth)acrylate ester may be a structural unit derived from an alkyl (meth)acrylate or a structural unit derived from an alkoxyalkyl (meth)acrylate. The structural unit derived from an alkyl (meth)acrylate is preferably a structural unit derived from an alkyl acrylate having a C1-C8 alkyl group, more preferably a structural unit derived from an alkyl acrylate having a C2-C6 alkyl group, still more preferably a structural unit derived from an alkyl acrylate having a C2-C4 alkyl group. Moreover, the structural unit derived from an alkoxyalkyl (meth)acrylate is preferably a structural unit derived from an alkoxyalkyl acrylate having a C2-C8 alkoxyalkyl group, more preferably a structural unit derived from an alkoxyalkyl acrylate having a C2-C6 alkoxyalkyl group, still more preferably a structural unit derived from an alkoxyalkyl acrylate having a C2-C4 alkoxyalkyl group. As the structural unit derived from a (meth)acrylate ester, a single structural unit derived from a (meth)acrylate ester or two or more structural units derived from (meth)acrylate esters may be used.

Specific examples of the alkyl (meth)acrylate include methyl (meth)acrylate, ethyl (meth)acrylate, n-propyl (meth)acrylate, isopropyl (meth)acrylate, n-butyl (meth)acrylate, isobutyl (meth)acrylate, n-pentyl (meth)acrylate, n-hexyl (meth)acrylate, n-heptyl (meth)acrylate, n-octyl (meth)acrylate, 2-ethylhexyl (meth)acrylate, cyclohexyl (meth)acrylate, and other (meth)acrylates, with ethyl (meth)acrylate or n-butyl (meth)acrylate being preferred.

Specific examples of the alkoxyalkyl (meth)acrylate include methoxymethyl (meth)acrylate, methoxyethyl (meth)acrylate, ethoxymethyl (meth)acrylate, 2-ethoxyethyl (meth)acrylate, 2-propoxyethyl (meth)acrylate, 2-butoxyethyl (meth)acrylate, 2-methoxypropyl (meth)acrylate, 2-ethoxypropyl (meth)acrylate, 3-methoxypropyl (meth)acrylate, 3-ethoxypropyl (meth)acrylate, 4-methoxybutyl (meth)acrylate, 4-ethoxybutyl (meth)acrylate, and other (meth)acrylates, with 2-methoxyethyl (meth)acrylate being preferred.

The amount of structural units derived from (meth)acrylate esters based on the total structural units of the acrylic rubber used in the crosslinking agent masterbatch of the present invention is preferably 50% by mass to 100% by mass, more preferably 50% by mass to 99.9% by mass, still more preferably 60% by mass to 99.9% by mass, particularly preferably 70% by mass to 99.9% by mass, further preferably 80% by mass to 99.9% by mass. Too small an amount of (meth)acrylate esters can lead to a reduction in oil resistance or heat resistance.

The acrylic rubber used in the crosslinking agent masterbatch of the present invention may contain a structural unit derived from a crosslinking group-containing unsaturated monomer. Examples of the structural unit derived from a crosslinking group-containing unsaturated monomer include a structural unit derived from a halogen (e.g., chlorine) group-containing unsaturated monomer, a structural unit derived from an epoxy group-containing unsaturated monomer, a structural unit derived from a carboxyl group-containing unsaturated monomer, and a structural unit derived from a conjugated or non-conjugated diene monomer unsaturated monomer. Preferably, the acrylic rubber contains a structural unit derived from a carboxyl group-containing unsaturated monomer or does not contain a structural unit derived from a crosslinking group-containing unsaturated monomer.

Examples of the halogen group-containing unsaturated monomer include vinyl monochloroacetate and allyl chloroacetate, with vinyl monochloroacetate being preferred.

Examples of the epoxy group-containing unsaturated monomer include glycidyl (meth)acrylate and (meth)allyl glycidyl ether.

Examples of the carboxyl group-containing unsaturated monomer include unsaturated monocarboxylic acids such as (meth)acrylic acid, crotonic acid, 2-pentenoic acid, and cinnamic acid; unsaturated dicarboxylic acids such as fumaric acid, maleic acid, and itaconic acid; carboxylic anhydrides such as maleic anhydride and citraconic anhydride; butenedioic acid monoacyclic alkyl esters such as monomethyl fumarate, monoethyl fumarate, mono-n-butyl fumarate, monomethyl maleate, monoethyl maleate, mono-2-ethylhexyl maleate, and mono-n-butyl maleate; butenedioic acid monocyclic alkyl esters such as monocyclopentyl fumarate, monocyclohexyl fumarate, monocyclopentyl maleate, and monocyclohexyl maleate; and itaconic acid monoesters such as monomethyl itaconate, monoethyl itaconate, mono-n-butyl itaconate, and monocyclohexyl itaconate. Preferred among these are unsaturated dicarboxylic acid monoesters such as monoethyl fumarate, monopropyl fumarate, monobutyl fumarate, monoethyl itaconate, monopropyl itaconate, and monobutyl itaconate, etc.

Examples of the conjugated diene monomer include 1,3-butadiene, 2-methyl-1,3-butadiene, 2-chloro-1,3-butadiene, 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene, 1,3-hexadiene, chloroprene, and piperylene. These may be used alone or in combinations of two or more.

Examples of the non-conjugated diene monomer include 1,4-pentadiene, 1,4-hexadiene, ethylidene norbornene, norbornadiene, and dicyclopentadiene.

These crosslinking group-containing unsaturated monomers may be used alone or in combinations of two or more.

The amount of structural units derived from crosslinking group-containing unsaturated monomers based on the total structural units of the acrylic rubber used in the crosslinking agent masterbatch is preferably 0% by mass to 20% by mass, more preferably 0% by mass to 15% by mass, particularly preferably 0.1% by mass to 10% by mass.

The ethylene-acrylic rubber used in the crosslinking agent masterbatch of the present invention may be a polymer that contains 50% by mass to 99.9% by mass of a structural unit derived from a (meth)acrylate ester as a main component, 0.1% by mass to 50% by mass of a structural unit derived from ethylene, and 0 to 20% by mass of a structural unit derived from a crosslinking group-containing unsaturated monomer.

The structural unit derived from a (meth)acrylate ester is not limited. Examples include the above-described alkyl (meth)acrylate monomers and alkoxyalkyl (meth)acrylate monomers.

The amount of structural units derived from (meth)acrylate esters based on the total structural units of the ethylene-acrylic rubber used in the crosslinking agent masterbatch of the present invention is preferably 50% by mass to 99.9% by mass, more preferably 60% by mass to 99.5% by mass, still more preferably 70% by mass to 99% by mass, particularly preferably 80% by mass to 99% by mass. Moreover, the amount of structural units derived from ethylene is preferably 0.1% by mass to 50% by mass, more preferably 0.5% by mass to 40% by mass, still more preferably 1% by mass to 30% by mass, particularly preferably 1% by mass to 20% by mass.

The ethylene-acrylic rubber used in the crosslinking agent masterbatch of the present invention may contain a structural unit derived from a crosslinking group-containing unsaturated monomer in addition to a structural unit derived from a (meth)acrylate ester and a structural unit derived from ethylene. Here, examples of the structural unit derived from a crosslinking group-containing unsaturated monomer include those described above. The amount of structural units derived from crosslinking group-containing unsaturated monomers based on the total structural units of the ethylene-acrylic rubber is preferably 0% by mass to 20% by mass, more preferably 0.1% by mass to 15% by mass, still more preferably 0.1% by mass to 10% by mass. Too large an amount of crosslinkable monomer units can lead to a reduction in the elongation of the resulting crosslinked rubber product.

The nitrile rubber used in the crosslinking agent masterbatch of the present invention may be a polymer that contains 10% by mass to 70% by mass of a structural unit derived from an ethylenically unsaturated nitrile as a main component, 30% by mass to 90% by mass of a structural unit derived from a conjugated diene, and 0% by mass to 20% by mass of a structural unit derived from a crosslinking group-containing unsaturated monomer.

The nitrile rubber used in the crosslinking agent masterbatch of the present invention contains a structural unit derived from an ethylenically unsaturated nitrile and a structural unit derived from a conjugated diene. Examples of the ethylenically unsaturated nitrile monomer include acrylonitrile, methacrylonitrile, α-methoxyacrylonitrile, and vinylidene cyanide. Examples of the conjugated diene monomer include 1,3-butadiene, 2-methyl-1,3-butadiene, 2-chloro-1,3-butadiene, 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene, 1,3-hexadiene, chloroprene, and piperylene. These may be used alone or in combinations of two or more.

The amount of structural units derived from ethylenically unsaturated nitriles is preferably 10% by mass to 70% by mass, more preferably 15% by mass to 60% by mass, still more preferably 20% by mass to 50% by mass. Moreover, the amount of structural units derived from conjugated dienes is preferably 30% by mass to 90% by mass, more preferably 40% by mass to 85% by mass, still more preferably 50% by mass to 80% by mass.

The nitrile rubber used in the crosslinking agent masterbatch of the present invention may contain a structural unit derived from a crosslinking group-containing unsaturated monomer in addition to the structural unit derived from an ethylenically unsaturated nitrile and the structural unit derived from a conjugated diene. Here, examples of the structural unit derived from a crosslinking group-containing unsaturated monomer include those described above. The amount of structural units derived from crosslinking group-containing unsaturated monomers based on the total structural units of the nitrile rubber is preferably 0% by mass to 20% by mass, more preferably 0% by mass to 15% by mass, still more preferably 0% by mass to 10% by mass. Too large an amount of crosslinkable monomer units can lead to a reduction in the elongation of the resulting crosslinked rubber product.

The hydrogenated nitrile rubber used in the crosslinking agent masterbatch of the present invention is one obtained by hydrogenating some or all of the carbon-carbon unsaturated bonds in the above-described nitrile rubber including a structural unit derived from an ethylenically unsaturated nitrile and a structural unit derived from a conjugated diene.

Further, the synthetic rubber used in the crosslinking agent masterbatch may contain structural units derived from copolymerizable monomers other than those described above, without departing from the gist of the present invention.

For the acrylic rubber and the ethylene-acrylic rubber, examples include ethylenically unsaturated nitrile monomers, (meth)acrylamide monomers, aromatic vinyl monomers, conjugated diene monomers, non-conjugated diene monomers, vinyl carboxylate monomers, and other olefin monomers. These may be used alone or in combinations of two or more.

For the nitrile rubber and the hydrogenated nitrile rubber, examples include (meth)acrylate ester monomers, (meth)acrylamide monomers, aromatic vinyl monomers, vinyl carboxylate monomers, and other olefin monomers. These may be used alone or in combinations of two or more.

Examples of the ethylenically unsaturated nitrile monomers include acrylonitrile, methacrylonitrile, α-methoxyacrylonitrile, and vinylidene cyanide. These may be used alone or in combinations of two or more.

Examples of the (meth)acrylate ester monomers include alkyl (meth)acrylates, specific examples of which include methyl (meth)acrylate, ethyl (meth)acrylate, n-propyl (meth)acrylate, isopropyl (meth)acrylate, n-butyl (meth)acrylate, isobutyl (meth)acrylate, n-pentyl (meth)acrylate, n-hexyl (meth)acrylate, n-heptyl (meth)acrylate, n-octyl (meth)acrylate, 2-ethylhexyl (meth)acrylate, cyclohexyl (meth)acrylate, and other (meth)acrylates. Examples include alkoxy (meth)acrylates such as methoxymethyl (meth)acrylate, methoxyethyl (meth)acrylate, ethoxymethyl (meth)acrylate, 2-ethoxyethyl (meth)acrylate, 2-propoxyethyl (meth)acrylate, 2-butoxyethyl (meth)acrylate, 2-methoxypropyl (meth)acrylate, 2-ethoxypropyl (meth)acrylate, 3-methoxypropyl (meth)acrylate, 3-ethoxypropyl (meth)acrylate, 4-methoxybutyl (meth)acrylate, 4-ethoxybutyl (meth)acrylate, and other (meth)acrylates. These may be used alone or in combinations of two or more.

Examples of the (meth)acrylamide monomers include acrylamide, methacrylamide, diacetone acrylamide, diacetone methacrylamide, N-butoxymethylacrylamide, N-butoxymethylmethacrylamide, N-butoxyethylacrylamide, N-butoxyethylmethacrylamide, N-methoxymethylacrylamide, N-methoxymethylmethacrylamide, N-propioxymethylacrylamide, N-propioxymethylmethacrylamide, N-methylacrylamide, N-methylmethacrylamide, N,N-dimethylacrylamide, N,N-dimethylmethacrylamide, N,N-diethylacrylamide, N,N-diethylmethacrylamide, N-methylolacrylamide, N-methylolmethacrylamide, ethacrylamide, crotonamide, cinnamic acid amide, maleic diamide, itaconic diamide, methyl maleamide, methyl itaconamide, maleimide, and itaconimide. These may be used alone or in combinations of two or more.

Examples of the aromatic vinyl monomers include styrene, α-methylstyrene, o-methylstyrene, p-methylstyrene, o-ethylstyrene, p-ethylstyrene, α-fluorostyrene, p-trifluoromethylstyrene, p-methoxystyrene, p-aminostyrene, p-dimethylaminostyrene, p-acetoxystyrene, styrenesulfonic acid and salts thereof, α-vinylnaphthalene, 1-vinylnaphthalene-4-sulfonic acid and salts thereof, 2-vinylfluorene, 2-vinylpyridine, 4-vinylpyridine, divinylbenzene, diisopropenylbenzene, and vinylbenzyl chloride. These may be used alone or in combinations of two or more.

Examples of the vinyl carboxylate monomers include vinyl acetate, vinyl propionate, vinyl butyrate, vinyl crotonate, vinyl cinnamate, and vinyl pivalate. These may be used alone or in combinations of two or more.

Examples of the other olefin monomers include esters such as dicyclopentadienyl acrylate, dicyclopentadienyl methacrylate, dicyclopentadienylethyl acrylate, and dicyclopentadienylethyl methacrylate; and ethylene (excluded for the ethylene-acrylic rubber as it is an essential component), propylene, vinyl chloride, vinylidene chloride, 1,2-dichloroethylene, vinyl fluoride, vinylidene fluoride, 1,2-difluoroethylene, vinyl bromide, vinylidene bromide, 1,2-dibromoethylene, ethyl vinyl ether, and butyl vinyl ether. These may be used alone or in combinations of two or more.

The amount of structural units derived from other copolymerizable monomers based on the total structural units of the synthetic rubber used in the crosslinking agent masterbatch is 30% by mass or less, preferably 20% by mass or less, still more preferably 10% by mass or less.

The amount of synthetic rubbers based on 100% by mass of the crosslinking agent masterbatch of the present invention is preferably 17% by mass to 55% by mass, more preferably 20% by mass to 50% by mass, still more preferably 20% by mass to 45% by mass, particularly preferably 20% by mass to 40% by mass. When the amount is within the above range, the resulting crosslinked rubber product tends to have better mechanical strength, and the masterbatch itself tends to be easier to prepare.

### (B) Aromatic polyamine

The aromatic polyamine used in the crosslinking agent masterbatch of the present invention may be any aromatic polyamine that is crosslinkable with a synthetic rubber and a polyamine-crosslinkable rubber. Such aromatic polyamines may be used alone or in combinations of two or more. Preferred are aromatic polyamines other than those with a benzidine structure, which are classified as Class 1 specified chemical substances in the Ordinance on Prevention of Hazards Due to Specified Chemical Substances (i.e., aromatic polyamines with no benzidine structure). More preferred are substituent-containing aromatic polyamines represented by the following formula (1) or the following formula (2), with substituent-containing aromatic polyamines represented by the following formula (2) being still more preferred.

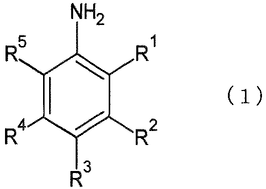

In formula (1), R¹ to R⁵ are the same or different and each represent a monovalent group, at least one of R¹ to R⁵ is an amino group, and those of R¹ to R⁵ which are not amino groups may each be connected via a carbon atom, an oxygen atom, and/or a sulfur atom to form a ring structure.

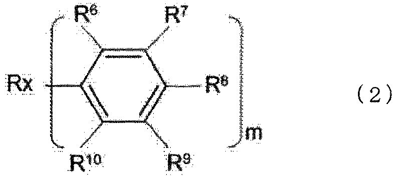

In formula (2), m represents an integer of 2 to 4; Rx represents a divalent to tetravalent group; and R⁶ to R¹⁰ are the same or different and each represent a monovalent group, at least one of R⁶ to R¹⁰ is an amino group, each unit may have the same or a different substituent at the same position, and those of R⁶ to R¹⁰ which are not amino groups may each be connected via a carbon atom, an oxygen atom, and/or a sulfur atom to form a ring structure.

R¹ to R⁵ are the same or different and each represent a monovalent group, and at least one of R¹ to R⁵ is an amino group. Preferably, one of R¹ to R⁵ is an amino group. Those of R¹ to R⁵ which are not amino groups may each be any monovalent group, for example, an atom (such as carbon, oxygen, hydrogen, or sulfur) or a group of atoms consisting of a plurality of atoms (such as carbon, oxygen, hydrogen, or sulfur). Specific examples of those of R¹ to R⁵ which are not amino groups include a hydrogen atom, alkyl groups, halogen groups, halogenated alkyl groups, a hydroxyl group, a carboxyl group, and a sulfone group. Among these, a hydrogen atom or alkyl groups are preferred, with a hydrogen atom being more preferred. Preferably, one of R¹ to R⁵ is an amino group and the rest are all hydrogen atoms.

Those of R¹ to R⁵ which are not amino groups may each be connected via a carbon atom, an oxygen atom, and/or a sulfur atom to form a ring structure.

The symbol m represents an integer of 2 to 4, and m is preferably an integer of 2 or 3, more preferably 2.

Rx may be any divalent to tetravalent group. Rx is preferably a nitrogen atom, an oxygen atom, a C1-C6 linear or branched alkyl group, an aromatic group, a benzenediol group, a phenylenediisopropylidene group, an isopropylidene diphenylene group, a biphenol group, a bisphenol group, a sulfone group, a carbonyl group, or an anilide group. Here, although an alkyl group, for example, is a monovalent group, the alkyl group described in this paragraph shall be read as a divalent to tetravalent group corresponding to the alkyl group. The same applies to the other groups.

Rx is more preferably a divalent group, still more preferably an oxygen atom (an ether group), a benzenediol group (a group represented by the following formula (A-1)), a phenylenediisopropylidene group, an isopropylidene diphenylene group (a group represented by the following formula (A-2)), or a biphenol group (a group represented by the following formula (A-3)), particularly preferably an oxygen atom (an ether group), a benzenediol group (a group represented by the following formula (A-1)), an isopropylidene diphenylene group (a group represented by the following formula (A-2)), or a biphenol group (a group represented by the following formula (A-3)), most preferably an oxygen atom (an ether group), a group represented by the following formula (B-1), a group represented by the following formula (B-2), or a group represented by the following formula (B-3). Here, the structural unit shown in the parentheses [] in formula (2) is bound to the O- in each formula.

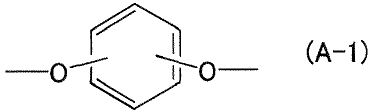

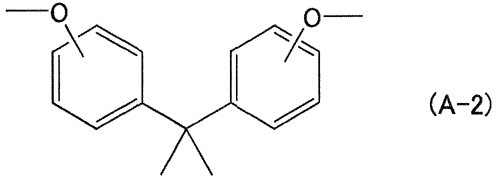

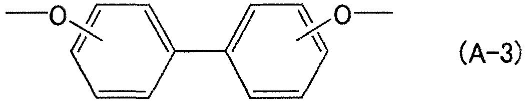

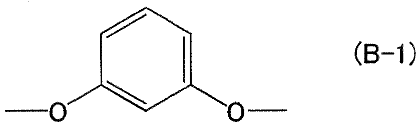

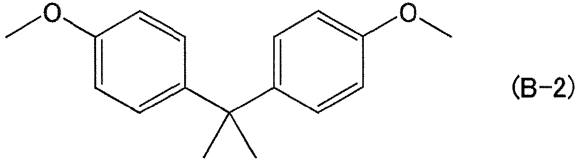

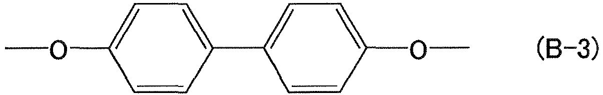

R⁶ to R¹⁰ are the same or different and each represent a monovalent group, and at least one of R⁶ to R¹⁰ is an amino group. Preferably, one of R⁶ to R¹⁰ is an amino group. More preferably, R⁷ or R⁸ is an amino group. Still more preferably, R⁸ is an amino group. Those of R⁶ to R¹⁰ which are not amino groups may each be any monovalent group, for example, an atom (such as carbon, oxygen, hydrogen, or sulfur) or a group of atoms consisting of a plurality of atoms (such as carbon, oxygen, hydrogen, or sulfur). Specific examples of those of R⁶ to R¹⁰ which are not amino groups include a hydrogen atom, alkyl groups, halogen groups, halogenated alkyl groups, a hydroxyl group, a carboxyl group, and a sulfone group. Among these, a hydrogen atom or alkyl groups are preferred, with a hydrogen atom being more preferred. Preferably, one of R⁶ to R¹⁰ is an amino group and the rest are all hydrogen atoms.

Each unit may have the same or a different substituent at the same position. Here, the term "substituent at the same position" may mean R⁶ in a unit and R⁶ in another unit. Herein, the term "unit" means the structural unit shown in the parentheses [] in formula (2).

Those of R⁶ to R¹⁰ which are not amino groups may each be connected via a carbon atom, an oxygen atom, and/or a sulfur atom to form a ring structure.

Examples of aromatic polyamines corresponding to formula (1) include o-phenylenediamine, p-phenylenediamine, m-phenylenediamine, 2,6-diamino-3,5-diethyltoluene, and 1,3,5-benzenetriamine.

Examples of aromatic polyamines corresponding to formula (2) include aromatic diamines such as 3,4'-diaminodiphenyl ether, 4,4'-diaminodiphenyl ether, 4,4'-methylenedianiline, 4,4'-ethylenedianiline, 1,3-bis(4-aminophenoxy)propane, 1,4-bis(4-aminophenoxy)butane, 1,5-bis(4-aminophenoxy)pentane, 1,6-bis(4-aminophenoxy)hexane, 3,3'-dichloro-4,4'-diaminodiphenylmethane, 4,4'-diamino-3,3'-dimethyldiphenylmethane, 4,4'-diamino-3,3'-diethyl-5,5'-dimethyldiphenylmethane, 5,5'-methylenebis(2-amino benzoic acid), 4,4'-methylenebis(o-chloroaniline), 2,2'-bis(3-amino-4-hydroxyphenyl)hexafluoropropane, 3,3'-diaminodiphenylsulfone, 4,4'-diaminodiphenylsulfone, bis(3-amino-4-hydroxyphenyl)sulfone, 3,7-diamino-2,8-dimethyldibenzothiophenesulfone, 1,3-bis(3-aminophenoxy)benzene, 1,3-bis(4-aminophenoxy)benzene, 1,4-bis(4-aminophenoxy)benzene, 4,4'-bis(4-aminophenoxy)biphenyl, 4,4'-(p-phenylenediisopropylidene)dianiline, 4,4'-(m-phenylenediisopropylidene)dianiline, 2,2-bis[4-(4-aminophenoxy)phenyl]propane, 2,2-bis[4-(4-aminophenoxy)phenyllhexafluoropropane, bis[4-(3-aminophenoxy)phenyl]sulfone, bis[4-(4-aminophenoxy)phenyl]sulfone, 4,4'-diaminobenzanilide, and 4-aminophenyl-4-aminobenzoate. Examples include aromatic triamines such as tris(4-aminophenyl)amine, 1,3,5-tris(4-aminophenyl)benzene, 4,4',4''-methanetriyltrianiline, and 2,4,6-tris(4-aminophenyl)-1,3,5-triazine. Examples include aromatic tetraamines such as tetrakis(4-aminophenyl)methane.

Preferred among these are aromatic polyamines having a substituent different from an amino group, preferably an ether group, at the para or meta position, preferably the para position, with respect to the amino group involved in a crosslinking reaction. Examples include p-phenylenediamine, m-phenylenediamine, 4,4'-methylenedianiline, 1,3-bis(4-aminophenoxy)propane, 1,4-bis(4-aminophenoxy)butane, 1,5-bis(4-aminophenoxy)pentane, 1,6-bis(4-aminophenoxy)hexane, 4,4'-ethylenedianiline, 3,4'-diaminodiphenyl ether, 4,4'-diaminodiphenyl ether, 3,3'-diaminodiphenyl sulfone, 4,4'-diaminodiphenyl sulfone, 1,3-bis(3-aminophenoxy)benzene, 1,3-bis(4-aminophenoxy)benzene, 1,4-bis(4-aminophenoxy)benzene, 4,4'-(p-phenylenediisopropylidene)dianiline, 4,4'-(m-phenylenediisopropylidene)dianiline, 2,2-bis[4-(4-aminophenoxy)phenyl]propane, 2,2-bis[4-(4-aminophenoxy)phenyl]hexafluoropropane, bis[4-(3-aminophenoxy)phenyl]sulfone, bis[4-(4-aminophenoxy)phenyl]sulfone, 4,4'-bis(4-aminophenoxy)biphenyl, 4,4'-diaminobenzanilide, and 4-aminophenyl-4-aminobenzoate. These may be used alone or in combinations of two or more. In particular, 2,2-bis[4-(4-aminophenoxy)phenyl]propane, 1,3-bis(4-aminophenoxy)benzene, 4,4'-diaminodiphenyl ether, 3,4'-diaminodiphenyl ether, and 4,4'-bis(4-aminophenoxy)biphenyl are preferred. If a substituent other than a hydrogen atom is present at the ortho position with respect to the amino group involved in a crosslinking reaction, the crosslinking reaction may not proceed sufficiently due to the steric hindrance, resulting in a crosslinked product with impaired physical properties.

The lower limit of the melting point of the aromatic polyamine used is preferably 50°C or higher, more preferably 70°C or higher, still more preferably 110°C or higher, while the upper limit is preferably 220°C or lower, more preferably 150°C or lower, most preferably 135°C or lower. As described above, the aromatic polyamine having such a relatively high melting point may show low dispersibility when added during the B kneading or kneaded only with an open roll mill. However, even the aromatic polyamine with a relatively high melting point can have greatly improved dispersibility when prepared into the crosslinking agent masterbatch of the present invention.

Herein, the melting point of the aromatic polyamine is measured in accordance with JIS K 0064:1992.

The amount of aromatic polyamines based on 100% by mass of the crosslinking agent masterbatch of the present invention is preferably 40% by mass to 78% by mass, more preferably 43% by mass to 75% by mass, still more preferably 45% by mass to 75% by mass, particularly preferably 47% by mass to 75% by mass.

Too low an aromatic polyamine content in the masterbatch is not preferred because a lot of essentially unnecessary ingredients, such as the synthetic rubber as a binder polymer and the additives mentioned below, are added when the masterbatch is added as a crosslinking agent.

On the other hand, too high an aromatic polyamine content in the masterbatch may result in a hard masterbatch without rubber elasticity. When such a masterbatch is used as a crosslinking agent masterbatch, the masterbatch itself may not disperse sufficiently but aggregate in the rubber composition, causing poor dispersion.

### (C) Lubricant

The lubricant used in the crosslinking agent masterbatch of the present invention may be a lubricant that is commonly used in rubber processing. Such lubricants may be used alone or in combinations of two or more. Generally, lubricants are processing aids used to improve adhesion during the kneading and/or forming of a rubber composition or to improve workability during processing, such as mold release properties. In the present invention, the examples suggest that the lubricant can contribute to improving the dispersibility of the synthetic rubber and the aromatic polyamine and can further contribute to increasing the concentration of the aromatic polyamine.

Examples of the lubricant include C10-C30 fatty acid lubricants such as stearic acid; C10-C30 higher alcohol lubricants; fatty acid ester lubricants such as polyhydric alcohol fatty acid esters and C10-C30 higher fatty acid alkyl esters; metallic soap lubricants such as magnesium stearate, calcium stearate, and zinc stearate; C10-C30 aliphatic amine lubricants such as octylamine, dodecylamine, and stearylamine; C10-C30 fatty acid amide lubricants such as stearic acid amide, oleic acid amide, erucic acid amide, and ethylene bis stearamide; polyalkylene glycol lubricants such as polyoxyethylene glycol, polyoxyethylene glycol alkyl ethers, polypropylene glycol, polypropylene glycol alkyl ethers, polytetramethylene glycol, and polytetramethylene glycol alkyl ethers; hydrocarbon lubricants such as liquid paraffin, paraffin wax, and synthetic polyethylene wax; and phosphate ester lubricants such as polyoxyethylene lauryl ether phosphate, polyoxyethylene stearyl ether phosphate, polyoxyethylene oleyl ether phosphate, and polyoxyethylene tridecyl ether phosphate. Preferred are fatty acid lubricants, fatty acid ester lubricants, aliphatic amine lubricants, fatty acid amide lubricants, hydrocarbon lubricants, and phosphate ester lubricants. These may be used alone or in combinations of two or more.

Herein, the term "fatty acid lubricant" means a lubricant containing a fatty acid as a main component, the term "higher alcohol lubricant" means a lubricant containing a higher alcohol as a main component, the term "fatty acid ester lubricant" means a lubricant containing a fatty acid ester as a main component, the term "metallic soap lubricant" means a lubricant containing a fatty acid metal salt as a main component, the term "aliphatic amine lubricant" means a lubricant containing an aliphatic amine as a main component, the term "fatty acid amide lubricant" means a lubricant containing a fatty acid amide as a main component, the term "polyalkylene glycol lubricant" means a lubricant containing a polyalkylene glycol as a main component, the term "hydrocarbon lubricant" means a lubricant containing a hydrocarbon as a main component, and the term "phosphate ester lubricant" means a lubricant containing a phosphate ester as a main component.

Herein, the term "main component" means a component contained in an amount of more than 50% by mass, preferably at least 80% by mass, based on 100% by mass of the lubricant.

The amount of lubricants based on 100% by mass of the crosslinking agent masterbatch of the present invention is 0.1% by mass to 10% by mass, preferably 0.3 to 9% by mass, more preferably 0.5 to 8% by mass.

The crosslinking agent masterbatch of the present invention may contain additives, if necessary, in addition to (A) the synthetic rubber, (B) the aromatic polyamine, and (C) the lubricant. Examples of the additives include antioxidants, light stabilizers, fillers, reinforcing agents, plasticizers, pigments, colorants, crosslinking retarders, crosslinking aids, antistatic agents, foaming agents, scorch inhibitors, and release agents. These may be used alone or in combinations of two or more.

The total amount of (A) synthetic rubbers, (B) aromatic polyamines, and (C) lubricants based on 100% by mass of the crosslinking agent masterbatch of the present invention is preferably 80% by mass or more, more preferably 85% by mass or more, still more preferably 88% by mass or more, particularly preferably 92% by mass or more, most preferably 95% by mass or more, and may be 100% by mass.

The crosslinking agent masterbatch of the present invention can be obtained by a kneading process using any means conventionally used in the field of rubber processing. The kneading machine used may be a batch-type kneading machine such as an open roll mill, a Bunbary mixer, or any type of kneader or may be a continuous-type kneading machine such as a single-screw extruder, a twin-screw extruder, or a feeder ruder.

The crosslinking agent masterbatch of the present invention has no risk of powder scattering, and the aromatic polyamine in the masterbatch also has good dispersibility. Thus, the crosslinking agent masterbatch may be used at any stage from the start of kneading to the production of a rubber composition. Moreover, any kneading temperature that ensures kneading can be used.

### <Rubber composition>

The rubber composition of the present invention contains at least the crosslinking agent masterbatch of the present invention and a polyamine-crosslinkable rubber.

### (Polyamine-crosslinkable rubber)

The polyamine-crosslinkable rubber used in the rubber composition of the present invention may be any rubber crosslinkable with an aromatic polyamine. Preferred are rubbers containing a structural unit derived from an unsaturated monomer having a carboxyl group as a crosslinking group. More preferred are carboxyl group-containing acrylic rubbers, carboxyl group-containing ethylene-acrylic rubbers, carboxyl group-containing nitrile rubbers, and carboxyl group-containing hydrogenated nitrile rubbers. Still more preferred are carboxyl group-containing acrylic rubbers, carboxyl group-containing ethylene-acrylic rubbers, and carboxyl group-containing hydrogenated nitrile rubbers. These may be used alone or in combinations of two or more.

The polyamine-crosslinkable rubber used in the rubber composition of the present invention may be different from the synthetic rubber used in the crosslinking agent masterbatch. However, when the polyamine-crosslinkable rubber is different from the synthetic rubber used in the crosslinking agent masterbatch, the synthetic rubber used in the crosslinking agent masterbatch is not an essential additive. Thus, preferably, the polyamine-crosslinkable rubber and the synthetic rubber used in the crosslinking agent masterbatch are in the same category. For example, when the polyamine-crosslinkable rubber is an acrylic rubber, the synthetic rubber used in the crosslinking agent masterbatch is preferably an acrylic rubber.

The amount of the crosslinking agent masterbatch of the present invention in the rubber composition of the present invention is preferably 0.5 parts by mass to 9.0 parts by mass, more preferably 1.0 parts by mass to 7.0 parts by mass, still more preferably 1.0 parts by mass to 5.0 parts by mass, per 100 parts by mass of the amount of polyamine-crosslinkable rubbers. Using too small an amount may result in a crosslinked product with a lower crosslink density, failing to achieve the expected mechanical strength, while using too large an amount may cause excessive crosslinking, resulting in a crosslinked product that is too hard.

The rubber composition of the present invention may contain additives, if necessary. Examples of the additives include crosslinking agents, lubricants, antioxidants, light stabilizers, fillers, reinforcing agents, plasticizers, pigments, colorants, crosslinking retarders, crosslinking aids, antistatic agents, foaming agents, scorch inhibitors, and release agents. These may be used alone or in combinations of two or more.

### <Crosslinked rubber product>

The crosslinked rubber product of the present invention can be produced by crosslinking the above-described rubber composition.

The crosslinked rubber product of the present invention can be produced by heating the rubber composition to usually 100°C to 250°C. Although the duration of crosslinking depends on the temperature, it is usually 0.5 to 300 minutes. With regard to crosslinking and forming, crosslinking and forming may be performed in an integrated manner, or a previously formed product of the rubber composition may be reheated to produce a crosslinked rubber product. Alternatively, a crosslinked rubber product obtained by previously heating the composition may be processed for forming. Specifically, the crosslinking and forming may be performed by compression or injection molding using a mold, heating using a steam can, an air bath, infrared rays, or microwaves, or any other method.

The rubber composition of the present invention obtained as described above has excellent crosslinking agent dispersibility, and the crosslinked rubber product of the present invention has excellent quality.

### EXAMPLES

The present invention will be specifically described with reference to, but not limited to, examples and comparative examples.

### (Raw materials used)

### (A) Synthetic rubber

Acrylic rubber (crosslinking group: carboxyl group, available from Osaka Soda Co., Ltd.)
Ethylene-acrylic rubber (crosslinking group: carboxyl group, available from Celanese)
Nitrile rubber (nitrile rubber with no crosslinking group, available from ARLANXEO)
Hydrogenated nitrile rubber (hydrogenated nitrile rubber with no crosslinking group, available from Zeon Corporation)

### (B) Aromatic polyamine

2,2-Bis[4-(4-aminophenoxy)phenyl]propane (trade name BAPP, available from Seika Corporation, melting point 128°C)
1,3-Bis(4-aminophenoxy)benzene (trade name TPE-R, available from Seika Corporation, melting point 116°C)
4,4'-Diaminodiphenyl ether (trade name DPE, available from Seika Corporation, melting point 191°C)
3,4'-Diaminodiphenyl ether (trade name 3,4'-DPE, available from Seika Corporation, melting point 74°C)
4,4'-Bis(4-aminophenoxy)biphenyl (trade name 4-APBP, available from Nipponjunryo Chemicals Co., Ltd., melting point 199°C)

### (C) Lubricant

Stearic acid (fatty acid lubricant, trade name stearic acid SAKURA, available from NOF Corporation)
Paraffin wax (hydrocarbon lubricant, trade name paraffin wax 135, available from Nippon Seiro Co., Ltd.)
Fatty acid ester wax (fatty acid ester lubricant, trade name Greg G-8205, available from NI Chemitech Corporation)
Polyhydric alcohol fatty acid ester (fatty acid ester lubricant, trade name Struktol WB222, available from Schill+Seilacher)
Higher fatty acid ester (fatty acid ester lubricant, trade name Struktol WB212, available from Schill+Seilacher)
Stearylamine (aliphatic amine lubricant, trade name LIPOMIN 18D, available from Lion Corporation)
Ethylene bis stearamide (fatty acid amide lubricant, trade name KAO wax EB-P, available from Kao Corporation)
Polyoxyethylene alkyl ester phosphate (phosphate ester lubricant, trade name PHOSPHANOL RL-210, available from TOHO Chemical Industry Co., Ltd.)
Phosphate ester of modified fatty alcohol (phosphate ester lubricant, trade name: Ofalub SEO, available from safic alcan)

### (D) Others

Carbon black (trade name Seast SO, available from Tokai Carbon Co., Ltd.)
Silica gel (trade name Nipsil ER, available from Toso Silica Corporation)
Talc (trade name Hifiller #5000PJ, available from Matsumura Sangyo Co., Ltd.)
4,4'-Bis(a,a-dimethylbenzyl)diphenylamine (trade name NOCRAC CD, available from Ouchi Shinko Chemical Industrial Co., Ltd.)
2-Mercaptobenzimidazole (trade name NOCRAC MB, available from Ouchi Shinko Chemical Industrial Co., Ltd.)
Zinc salt of 2-mercaptobenzimidazole (trade name NOCRAC MBZ, available from Ouchi Shinko Chemical Industrial Co., Ltd.)
Adipic acid ether ester plasticizer (trade name ADK CIZER RS107, available from ADEKA Corporation)
Polyether ester plasticizer (trade name ADK CIZER RS735, available from ADEKA Corporation)
Tri-n-alkyl trimellitate (C8, C10) (trade name TRIMEX N-08, available from Kao Corporation)
Iron oxide (III) (available from FUJIFILM Wako Pure Chemical Corporation)

### <Example 1: Production of masterbatch A>

As shown in Table 1, 46 parts by mass of an acrylic rubber, 50 parts by mass of BAPP, 2 parts by mass of stearic acid, and 2 parts by mass of carbon black were sequentially added to Labo Plastomill (available from Toyo Seiki Seisaku-sho, Ltd., capacity 60 ml) and kneaded in a temperature range from 110°C to 135°C for 12 minutes to obtain a masterbatch A. The masterbatch A was subjected to the following evaluation. Table 1 shows the results.

### (Dumping properties)

The ease of removal (dumping properties) of the masterbatch from Labo Plastomill was evaluated by visually observing the degree of adhesion of the masterbatch in the mixing tank. Here, the dumping properties of the masterbatch were evaluated based on the following criteria. ∘: No adhesion of the masterbatch occurs in the mixing tank, and it is possible to remove it without difficulty. ×: Adhesion of the masterbatch occurs in the mixing tank, and it is difficult to remove it.

The masterbatch A was subjected to 10-pass kneading with an 8 inch roll to obtain a sheet of the masterbatch A. The masterbatch A sheet was subjected to the following evaluation. Table 1 shows the results.

### (Roll processability)

The roll processability of the masterbatch during the 10-pass kneading with the 8 inch roll was evaluated. Here, the roll processability was evaluated based on the following criteria.
∘: The 10-pass kneading can be performed without interfering with the roll kneading operation.
×: The masterbatch adheres to the roll and interferes with the kneading operation, for example by requiring the roll to be stopped during removal.

### (Flexibility)

The flexibility of the sheet obtained by roll kneading was evaluated by folding the sheet 180 degrees and visually observing the surface condition. Here, the flexibility was evaluated based on the following criteria. ∘: The sheet shows no crack, fissure, or other defect and is flexible.
×: The sheet shows cracks, fissures, or other defects and is not flexible.

### <Examples 2 to 14 and Comparative Examples 1 and 2: Production of masterbatches B to P>

Masterbatches were obtained by adding the compounding agents shown in Table 1. The kneading temperature range and the duration of kneading are shown in Table 1. The masterbatches were evaluated as described above. Table 1 shows the evaluation results.

**[Table 1]**

| | | | Ex. 1 | Ex. 2 | Ex. 3 | 4 | Ex. 5 | Ex. 6 | Ex. 7 | Ex. 8 | Ex. 9 | Ex. 10 | Ex. 11 | Ex. 12 | Ex. 13 | Ex. 14 | Comp. Ex. 1 | Comp. Ex. 2 |
|---|---|---|---|---|---|---|---|---|---|---|---|---|---|---|---|---|---|---|
| Masterbatch | | | A | B | C | D | E | F | G | H | I | J | K | L | M | N | O | P |
| (A) | Acrylic rubber | (parts by mass) | 46 | 36 | 26 | 49 | 34 | 33 | 36 | 22 | 32 | | | | | | 48 | 16 |
| | Ethylene-acrylic rubber | (parts by mass) | | | | | | | | | | 25.6 | 36 | 35 | | | | |
| | Hydrogenated nitrile rubber | (parts by mass) | | | | | | | | | | | | | 36 | | | |
| | Nitrile rubber | (parts by mass) | | | | | | | | | | | | | | 20 | | |
| (B) | 2,2-Bis[4-(4-aminophenoxy)phenyl]propane | (parts by mass) | 50 | 60 | 70 | 43 | 60 | 50 | | 73 | | 60 | | | | | 50 | 80 |
| | 1,3-Bis(4-aminophenoxy)benzene | (parts by mass) | | | | | | | 60 | | | | | | 50 | | | |
| | 4,4'-Diaminodiphenyl ether | (parts by mass) | | | | | | | | | 55 | | | | | | | |
| | 3,4'-Diaminodiphenyl ether | (parts by mass) | | | | | | | | | | | 50 | | | 71 | | |
| | 4,4'-Bis(4-aminophenoxy)biphenyl | (parts by mass) | | | | | | | | | | | | 55 | | | | |
| (C) | Stearic acid | (parts by mass) | 2 | 2 | 2 | 2 | | 2 | | | 4 | 3 | | | 4 | | | 2 |
| | Paraffin wax | (parts by mass) | | | | | | | | 1 | | | | | | | | |
| | Ester wax | (parts by mass) | | | | | 2 | 2 | 1.6 | | | | | 2 | | 1 | | |
| | Stearylamine | (parts by mass) | | | | | 2 | | | | 1 | 1 | | | | | | |
| | Ethylene bis stearamide | (parts by mass) | | | | | | | | | 1 | | | 1 | | | | |
| | Polyhydric alcohol fatty acid ester | (parts by mass) | | | | 6 | | | | | | | | | | | | |
| | Higher fatty acid ester | (parts by mass) | | | | | | 2 | | | | | | | | | | |
| | Polyoxyethylene alkyl ether phosphate | (parts by mass) | | | | | | | | 4 | | 2 | | 2 | | | | |
| | Phosphate ester of modified fatty alcohol | (parts by mass) | | | | | | | | | | | 2 | | | | | |
| | Carbon black | (parts by mass) | 2 | 2 | 2 | | | 8 | | | | | 5 | 4 | | 1 | 2 | 2 |
| | Silica gel | (parts by mass) | | | | | | | | | 4 | | 4 | 1 | | | | |
| | Talc | (parts by mass) | | | | | | | | | | 2 | | | | | | |
| | 4,4'-Bis(a,a-dimethylbenzyl) diphenylamine | (parts by mass) | | | | | 2 | | 1 | | 2 | | 2 | | 2 | 3 | | |
| | 2-Mercaptobenzimidazole | (parts by mass) | | | | | | 1 | | | | | 1 | | | | | |
| | Zinc salt of 2-mercaptobenzimidazole | (parts by mass) | | | | | | | | | | | | | 1 | | | |
| | Adipic acid ether ester plasticizer | (parts by mass) | | | | | | 2 | | | | | | | | | | |
| | Polyether ester plasticizer | (parts by mass) | | | | | | | | | | 6 | | | | | | |
| | Tri-n-alkyl trimellitate (C8, C10) | (parts by mass) | | | | | | | | | | | | | 7 | 4 | | |
| | Iron oxide (III) | (parts by mass) | | | | | | | 1.4 | | 1 | 0.4 | | | | | | |
| Kneading conditions | Kneading temperature | (°C) | 110-135 | 110-135 | 110-135 | 110-135 | 110-135 | 110-135 | 95-120 | 110-135 | 170-200 | 50-80 | 45-85 | 45-100 | 90-120 | 55-80 | 110-135 | 110-135 |
| | Duration of kneading | (min) | 12 | 12 | 12 | 12 | 14 | 15.5 | 30 | 14 | 11.5 | 5.5 | 34 | 11 | 17.5 | 10.5 | 12 | 12 |
| Evaluation | Dumping properties | | ○ | ○ | ○ | ○ | ○ | ○ | ○ | ○ | ○ | ○ | ○ | ○ | ○ | ○ | × | ○ |
| | Roll processability | | ○ | ○ | ○ | ○ | ○ | ○ | ○ | ○ | ○ | ○ | ○ | ○ | ○ | ○ | × | × |
| | Flexibility | | ○ | ○ | ○ | ○ | ○ | ○ | ○ | ○ | ○ | ○ | ○ | ○ | ○ | ○ | ○ | × |

| | | | | | | | | | | | | | | | | | | |
|---|---|---|---|---|---|---|---|---|---|---|---|---|---|---|---|---|---|---|
| Ex.: Example Comp. Ex.: Comparative Example unit: % by mass | | | | | | | | | | | | | | | | | | |

The above results show that in each of Examples 1 to 3, the addition of the lubricant could improve the dispersibility of the crosslinking agent and further could increase the concentration of the crosslinking agent (aromatic polyamine) in the synthetic rubber. Moreover, the resulting crosslinking agent masterbatches had sufficient flexibility. Similar results were also obtained in Examples 4 to 14 in which the types of synthetic rubber, aromatic polyamine, and lubricant were changed. In contrast, Comparative Example 1 with no lubricant had significantly low workability for the production of the masterbatch, such as low dumping properties and low roll processability. Also, in Comparative Example 2 containing too large an amount of the crosslinking agent (aromatic polyamine), the roll processability during the masterbatch production deteriorated, and further the resulting masterbatch had significantly reduced flexibility and is thus unsuitable as a masterbatch.

The lubricant in the present invention was found to contribute not only to improving the processability during the masterbatch production but also to increasing the concentration of the aromatic polyamine. The essential part of this effect has not been analyzed yet, but it is believed that this effect is achieved due to the lubricant improving the dispersibility of the aromatic polyamine.

Next, the masterbatch produced as above, 2,2-bis[4-(4-aminophenoxy)phenyl]propane powder, and a polyamine-crosslinkable rubber were kneaded to prepare a rubber composition. The rubber composition was evaluated in terms of the dispersibility of the crosslinking agent and the smoothness and hardness of a vulcanized sheet as a crosslinked rubber product.

### <Example 15>

As shown in Table 2, 100 parts by mass of an acrylic rubber (crosslinking group: carboxyl group, available from Osaka Soda Co., Ltd.) as a polyamine-crosslinkable rubber, 60 parts by mass of carbon black, 2 parts by mass of stearic acid, and 2 parts by mass of an antioxidant were compounded and then subjected to A kneading with a 0.5 L kneader in a temperature range of 100°C to 140°C for seven minutes to obtain an A kneaded compound. To the A kneaded compound were added 2 parts by mass of the masterbatch B (2,2-bis[4-(4-aminophenoxy)phenyl]propane content: 1.2 parts by mass) produced in Example 2 and 2 parts by mass of an accelerator (RHENOGRAN XLA60, available from Lanxess), followed by B kneading with an 8 inch roll to obtain an uncrosslinked sheet of a rubber composition. The uncrosslinked sheet was evaluated on the dispersibility of the crosslinking agent as described below. Table 2 shows the results.

### (Dispersibility of crosslinking agent)

The surface of the uncrosslinked sheet of the rubber composition obtained above and the cross-section cut with scissors in a direction perpendicular to the grain direction of the uncrosslinked sheet were visually observed to evaluate the dispersion of the crosslinking agent. Here, the evaluation was performed based on the following criteria.
∘: The crosslinking agent showed good dispersion in the uncrosslinked sheet, and no aggregates were observed on the sheet surface and the cross-section.
×: The crosslinking agent showed poor dispersion in the uncrosslinked sheet, and white aggregates were observed on the sheet surface and the cross-section.

Separately, the uncrosslinked sheet of the rubber composition obtained above was pressed at 180°C for 10 minutes to obtain a primary crosslinked product with a length of 15 cm, a width of 15 cm, and a height of 2 mm. Further, the primary crosslinked product was heated in an air oven at 180°C for three hours to obtain a secondary crosslinked product (crosslinked rubber product). The smoothness and hardness of the crosslinked rubber product were evaluated as described below. Table 2 shows the results.

### (Smoothness)

The surface of the crosslinked rubber product obtained above was visually observed for evaluation. Here, the smoothness was evaluated based on the following criteria.
∘: The surface of the crosslinked rubber product has no or almost no irregularities and is in a good condition.
×: The surface of the crosslinked rubber product has many irregularities and is in a bad condition.

### (Hardness)

The hardness was measured at 11 random points of the crosslinked rubber product obtained above, and the maximum hardness, minimum hardness, their difference, and standard deviation were calculated. The hardness test was performed in accordance with JIS K 6253:2012.

### <Comparative Example 3>

An uncrosslinked sheet of a rubber composition was obtained by the same procedure as in Example 15, except that the crosslinking agent masterbatch was not used but was replaced by 2,2-bis[4-(4-aminophenoxy)phenyl]propane as a crosslinking agent. Moreover, the uncrosslinked sheet was crosslinked to obtain a crosslinked rubber product. They were evaluated as described above. Table 2 shows the results.

**[Table 2]**

| | | Example 15 | Comparative Example 3 |
|---|---|---|---|
| A kneading | Acrylic rubber | 100 | 100 |
| | Carbon black | 60 | 60 |
| | Stearic acid | 2 | 2 |
| | Antioxidant | 2 | 2 |
| B kneading | Masterbatch B | 2 | |
| | 2,2-Bis[4-(4-am inophenoxy)phenyl]propane | | 1.2 |
| | Accelerator | 2 | 2 |
| Evaluation | Dispersibility | ○ | × |
| | Smoothness | ○ | × |
| | Maximum hardness | 66.7 | 67.8 |
| | Minimum hardness | 65.3 | 65 |
| | Maximum hardness - Minimum hardness | 1.4 | 2.8 |
| | Standard deviation of hardness | 0.41 | 0.74 |

| | | | |
|---|---|---|---|
| unit: parts by mass | | | |

The above results show that the use of the masterbatch of 2,2-bis[4-(4-aminophenoxy)phenyl]propane, which is an aromatic polyamine crosslinking agent, could improve the dispersibility of 2,2-bis[4-(4-aminophenoxy)phenyl]propane in the uncrosslinked sheet and could improve the quality (hardness uniformity) of the crosslinked rubber product obtained by crosslinking the uncrosslinked sheet. Moreover, the masterbatch form could prevent powder scattering, thereby improving the working environment in rubber processing.

### INDUSTRIAL APPLICABILITY

The masterbatch of the present invention has good processability during its production and makes it possible to increase the concentration of an aromatic polyamine. This contributes to reducing the amount of the masterbatch used as a crosslinking agent, decreasing essentially unnecessary ingredients such as a binder rubber, and reducing the transportation cost of the masterbatch. Furthermore, when the masterbatch of the present invention is used to perform a kneading operation, the aromatic polyamine shows good dispersibility, and therefore the finally produced crosslinked rubber product has good quality. Also, from a handling perspective, there is no longer a risk of scattering, making it possible to improve the working environment.

## Claims

1. A crosslinking agent masterbatch, comprising at least:
(A) a synthetic rubber;
(B) an aromatic polyamine; and
(C) a lubricant,
the crosslinking agent masterbatch comprising 17% by mass to 55% by mass of (A) the synthetic rubber, 40% by mass to 78% by mass of (B) the aromatic polyamine, and 0.1% by mass to 10% by mass of (C) the lubricant.

2. The crosslinking agent masterbatch according to claim 1,
wherein (A) the synthetic rubber is at least one selected from the group consisting of an acrylic rubber, an ethylene-acrylic rubber, a nitrile rubber, and a hydrogenated nitrile rubber.

3. The crosslinking agent masterbatch according to claim 1,
wherein (B) the aromatic polyamine is an aromatic polyamine with no benzidine structure.

4. The crosslinking agent masterbatch according to claim 1,
wherein (B) the aromatic polyamine is a compound represented by the following formula (1) or the following formula (2): 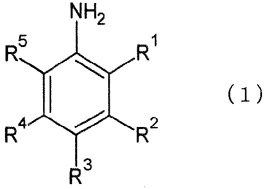 wherein R¹ to R⁵ are the same or different and each represent a monovalent group, at least one of R¹ to R⁵ is an amino group, and those of R¹ to R⁵ which are not amino groups may each be connected via a carbon atom, an oxygen atom, and/or a sulfur atom to form a ring structure, 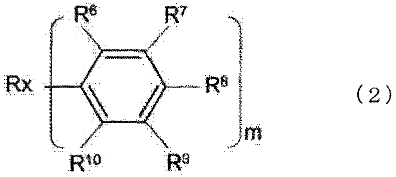 wherein m represents an integer of 2 to 4; Rx represents a divalent to tetravalent group; and R⁶ to R¹⁰ are the same or different and each represent a monovalent group, at least one of R⁶ to R¹⁰ is an amino group, each unit may have the same or a different substituent at the same position, and those of R⁶ to R¹⁰ which are not amino groups may each be connected via a carbon atom, an oxygen atom, and/or a sulfur atom to form a ring structure.

5. A rubber composition, comprising at least:
the crosslinking agent masterbatch according to any one of claims 1 to 4, and
a polyamine-crosslinkable rubber.

6. The rubber composition according to claim 5,
wherein the rubber composition comprises the crosslinking agent masterbatch according to any one of claims 1 to 4 in an amount of 0.5 parts by mass to 9.0 parts by mass per 100 parts by mass of the polyamine-crosslinkable rubber.

7. The rubber composition according to claim 5,
wherein the polyamine-crosslinkable rubber is at least one selected from the group consisting of a carboxyl group-containing acrylic rubber, a carboxyl group-containing ethylene-acrylic rubber, a carboxyl group-containing nitrile rubber, and a carboxyl group-containing hydrogenated nitrile rubber.

8. A crosslinked rubber product, produced from the rubber composition according to claim 5.
